# EUROPÄISCHE PATENTSCHRIFT

(11) **EP 1 407 991 B1**
(45) Veröffentlichungstag und Bekanntmachung des Hinweises auf die Patenterteilung: **12.07.2006**
(21) Anmeldenummer: 03019108.4
(22) Anmeldetag: 23.08.2003
(51) Int. Cl.: B65G 47/82

(54) **Vorrichtung zum Verschieben von auf einem Fördermittel geförderten Gegenständen**
Device for pushing of articles lying on a conveyor
Dispositif pour déplacer des articles se trouvant sur un convoyeur

(30) Priorität: 11.10.2002 CH 16962002
(43) Veröffentlichungstag der Anmeldung: 14.04.2004
(73) Patentinhaber: Ferag AG, 8340 Hinwil (CH)
(72) Erfinder: Stauber, Ulrich H., 8624 Grüt (CH)
(74) Vertreter: Schaad, Balass, Menzl & Partner AG

(56) Entgegenhaltungen:
- EP-A- 0 182 938
- EP-A- 0 659 665
- EP-A- 0 853 057
- JP-A- 56 065 712
- US-A- 3 212 623

## Beschreibung

Die Erfindung betrifft eine Vorrichtung zum Verschieben von auf einem Fördermittel geförderten Gegenständen gemäss dem Oberbegriff des Patentanspruchs 1.

Derartige Vorrichtungen kommen dann zum Einsatz, wenn Gegenstände, wie z.B. Kisten, Kartons, Zeitschriftenstapel oder dergleichen, in Stückgutformation auf einem Fördermittel gefördert werden und quer zur Förderrichtung auf dem Fördermittel verschoben werden sollen. Im Rahmen eines solchen Verschiebevorgangs können Gegenstände rechtwinklig oder schräg zur Förderrichtung in einen Förderprozess eingeschleust oder aus einem Förderprozess ausgeschleust werden. Ebenso ist es möglich, Gegenstände von einem Fördermittel auf ein weiteres Fördermittel umzusetzen, Gegenstände auf unterschiedliche Fördermittel zu verteilen, auf mehreren Fördermitteln geförderte Gegenstände auf einem Fördermittel zusammenzuführen oder Gegenstände zu sortieren.

Eine Vorrichtung der eingangs genannten Art ist aus der JP-A-56065712 bekannt. An einer drehend angetriebenen Welle ist ein Doppelarmhebel befestigt, an dessen beiden Enden je eine weitere Welle frei drehbar gelagert ist. Jede dieser weiteren Wellen ist über ein Rad-Riemen-Getriebe mit einem die Welle umgreifenden, rohrförmigen Teil eines Gehäuses verbunden, in welchem der Antrieb für die Welle angeordnet ist. Weiter ist an jeder weiteren Welle ein laschenförmiger Hebel befestigt, an dessen freiem Ende eine dritte Welle gelagert ist, die einerseits über ein weiteres Rad-Riemen-Getriebe mit dem Doppelarmhebel verbunden ist und andererseits über einen hebelförmigen Ausleger einen Schieber trägt. Beim Drehen der Welle bewegen sich die Schieber entlang einer Bewegungsbahn mit drei Ecken und dazwischen konkav verlaufenden Bewegungsabschnitten. Diese bekannte Vorrichtung bedingt eine erhebliche Bauhöhe und weiter dürfte sie kaum geeignet sein, sehr nahe aufeinanderfolgende Gegenstände zu fördern.

Eine weitere Vorrichtung ist beispielsweise aus der EP-A-0 532 978 bekannt. Dort sind zwei über Ausleger miteinander verbundene Schieber offenbart, welche auf einer langgestreckten Kreisbahn umlaufen, wobei sich eine Hälfte dieser langgestreckten Kreisbahn im Förderbereich und die andere Hälfte außerhalb des Förderbereichs befindet. Die beiden Schieber sind von einem Exzenterantrieb beaufschlagt, welcher dafür sorgt, dass sich die Schieber mit einer verhältnismäßig geringen Geschwindigkeit an die zu verschiebenden Gegenstände anlegen, woraufhin die Bewegung des Schiebers beschleunigt wird.

Weiter ist eine Vorrichtung aus dem europäischen Patent EP-B- 0 513 950 bekannt, in welchem ein an einem Rahmen gehaltener Schieber offenbart ist, welcher gemeinsam mit dem Rahmen entlang einer im Wesentlichen dreieckigen Bahn umläuft. Die Umlaufbahn ist dabei so orientiert, dass sich der Schieber während der Verschiebebewegung schräg zur Förderrichtung und während seiner daran anschließenden Rückzugsbewegung rechtwinklig zur Förderrichtung bewegt. Der Schieber wird von einem gelenkig miteinander verbundenen Hebelpaar getragen und der Rahmen ist an zwei Zugglieder angelenkt, welche die Bahn bestimmen.

Eine Aufgabe der Erfindung besteht darin, eine Vorrichtung der eingangs genannten Art bereitzustellen, welche mit vergleichsweise geringem wirtschaftlichem Aufwand kompakt und stabil zu realisieren ist und die es gleichzeitig ermöglicht, auf einem Fördermittel dicht aufeinanderfolgende Gegenstände schräg zur Förderrichtung zu verschieben.

Diese Aufgabe wird mittels einer gattungsgemässen Vorrichtung gelöst, welche die Merkmale des Kennzeichens des Anspruchs 1 aufweist.

Bevorzugte Ausbildungsformen der erfindungsgemässen Vorrichtung sind in abhängigen Ansprüchen angegeben.

Erfindungsgemäß wird der Schieber also drehbar an einem zweiteiligen Gelenkhebel gelagert, der aus den genannten ersten und zweiten Hebeln besteht. Mit dieser einfachen Gelenkhebelanordnung lässt sich bei Vorsehung eines entsprechenden Antriebs ohne großen Aufwand erreichen, dass sich der Schieber vergleichsweise schnell durch den Förderbereich bewegt und dabei die gewünschte Verschiebung des Gegenstands bewirkt, wobei gegen Ende des Verschiebevorgangs die Bewegungskomponente quer zur Förderrichtung des Fördermittels verringert werden kann, um so unerwünschte und insbesondere unkontrollierte Beschleunigungen des Gegenstands am Ende des Verschiebevorgangs zu vermeiden. Weiterhin kann der Schieber auf einfache Weise derart angesteuert werden, dass er auch eine Bewegungskomponente in Förderrichtung besitzt, so dass er während des Verschiebevorgangs gewissermaßen mit dem zu verschiebenden Gegenstand mitlaufen kann, was einen kontrollierten Verschiebevorgang ohne oder nur mit kleinen Relativbewegungen zwischen Schieber und Gegenstand ermöglicht. Nicht zuletzt kann die Umlaufbahn des Schiebers durch eine entsprechende Ansteuerung von erstem Hebel, zweitem Hebel und Schieber so gestaltet werden, dass der Schieber während der Verschiebebewegung und der daran anschließenden Rückzugsbewegung in Förderrichtung gesehen vergleichsweise wenig Platz beansprucht. Insofern ist es möglich, die zu verschiebenden Gegenstände erfindungsgemäß entlang des Fördermittels dicht aufeinander folgen zu lassen.

Die Vorrichtung weist einen äusserst kompakten und stabilen Aufbau auf, was eine schnelle Betätigung bei ruhigem Lauf ermöglicht.

Der erste Hebel, der zweite Hebel, der Schieber und der stationäre Tragarm können über ein Zahnriemen- und/oder ein Zahnradgetriebe wirkverbunden werden. Ein Beispiel für eine derartige Wirkverbindung wird im Rahmen der Figurenbeschreibung erläutert.

Besonders vorteilhaft ist es, wenn der erste Hebel als Doppelhebel ausgebildet wird, dessen beide Teile sich in entgegengesetzte Richtungen erstrecken, wobei sich die Drehachse des Doppelhebels in seinem mittleren Bereich befindet. Bevorzugt ist der Doppelhebel in einer senkrecht zu seiner Drehachse verlaufenden Ebene punktsymmetrisch zu seiner Drehachse ausgebildet. An ihren der Drehachse abgewandten Enden können die beiden Teile des Doppelhebels jeweils einen zweiten Hebel der vorstehend bereits beschriebenen Art mit jeweils einem Schieber der vorstehend bereits beschriebenen Art aufweisen. Bei einer derartigen Anordnung können bei aufeinanderfolgenden Verschiebebewegungen beide Schieber alternierend zum Einsatz gelangen, wobei sich beide Schieber auf einer im Wesentlichen dreieckigen Umlaufbahn derart bewegen können, dass sie sich im Bereich dieser Umlaufbahn jeweils gegenüberliegen.

Weisen die ersten Getriebeverbindungen ein ihnen gemeinsames Tragarmzahnrad auf, ist die Bauweise besonders kompakt.

Bevorzugt ist der erste Hebel mit einem Zahnrad verbunden, das von einem Antriebsmotor angetrieben ist. Der Antriebsmotor kann dadurch an einen von der Drehachse des ersten Hebels entfernten Ort angebracht sein, was in Richtung der Drehachse eine kompakte Bauweise der Vorrichtung zulässt.

Um eine möglichst flächige Anlage des Schiebers am zu verschiebenden Gegenstand zu erreichen, kann der Schieber derart am zweiten Hebel drehbar gelagert sein, dass sich die mit dem zu verschiebenden Produkt in Kontakt zu bringende Schieberfläche während der gesamten Umlaufbewegung des Schiebers parallel zur Förderrichtung erstreckt. Es erfolgt also sowohl während der Verschiebebewegung als auch während der Rückzugsbewegung des Schiebers lediglich eine Parallelverschiebung der genannten Schieberfläche.

Ist die Schieberfläche etwa an die halbe Länge des zweiten Hebels von ihrer Drehachse beabstandet, trägt dies zu einer optimalen geformten Umlaufbahn bei.

Bei der stationären Anordnung der Drehachse des ersten Hebels kann dieser um seine Drehachse drehbar an einem stationären Tragarm gehalten sein, welcher sich insbesondere bis in einen Bereich oberhalb des Fördermittels erstreckt. Der Tragarm ist dabei so weit oben angeordnet, dass er nicht mit auf dem Fördermittel geförderten Gegenständen kollidiert.

Zum Verschieben von Stapeln aus insbesondere blättrigen Gegenständen, wie Zeitungen, Zeitschriften, Prospekten und dergleichen, befindet sich das untere Ende des Schiebers nahe beim Fördermittel. Mittels am Schieber angeordneten Schiebemitteln, die über das Fördermittel streifen, lassen sich auch einzelne dünne Gegenstände verschieben.

Hebel und/oder Schieber können intermittierend antreibbar sein, damit immer nur dann ein Verschiebevorgang ausgelöst werden kann, wenn tatsächlich ein solcher benötigt wird. Ein derartiger Antrieb ist beispielsweise sinnvoll, wenn einzelne Gegenstände aus einem entlang eines Fördermittels transportierten Strom von Gegenständen ausgeschleust werden sollen. Beim intermittierenden Antrieb wird der Schieber bevorzugt kontinuierlich aus seiner Ausgangsposition in die Verschiebeposition und anschließend von der Verschiebeposition in seine Rückzugsposition und danach wiederum in seine Ausgangsposition bewegt, damit kurz nach Abschluss eines Verschiebevorgangs ausgehend von der Ausgangsposition gleich wieder ein weiterer Verschiebevorgang erfolgen kann.

Bevorzugt ist es, wenn der Schieber zum Verschieben eines Produktes aus einer Ausgangsposition durch den Förderbereich in eine das Ende des Verschiebevorgangs kennzeichnende Verschiebeposition bewegbar ist, wobei der Schieber nach dem Verschiebevorgang aus seiner Verschiebeposition in eine außerhalb des Förderbereichs gelegene Rückzugsposition bewegbar ist. Nach Erreichen der Rückzugsposition kann der Schieber dann außerhalb des Förderbereichs aus der Rückzugsposition wieder in seine Ausgangsposition bewegt werden. Der Schieber kann sich in diesem Fall auf einer im Wesentlichen dreieckigen Umlaufbahn bewegen, die an ihren Eckpunkten die genannten Positionen (Ausgangsposition, Verschiebeposition und Rückzugsposition) umfasst. Weiter entspricht die Umlaufbahn wenigstens annähernd einen gleichseitigen Dreieck mit geradlinigen Seiten.

Um im Förderbereich in Förderrichtung gesehen möglichst wenig Platz zu beanspruchen, ist es weiterhin von Vorteil, wenn die Hebel derart angetrieben sind, dass der zweite Hebel nach Verlassen der Ausgangsposition in Richtung der Drehachse des ersten Hebels schwenkt. Er kann dann noch vor Erreichen der Verschiebeposition wieder von dieser Drehachse wegschwenken.

Die Vorrichtung weist auf einen äusserst kompakten und stabilen Aufbau auf, was eine schnelle Betätigung bei ruhigem Lauf ermöglicht.

Es ist auch vorteilhaft, wenn bei einer Ausbildungsform mit Doppelhebel ein Schieber in seine Ausgangsposition gelangt, wenn der andere Schieber in seine Rückzugsposition gelangt. So wird erreicht, dass nach Abschluss eines Verschiebevorgangs und der anschließenden Rückzugsbewegung eines ersten Schiebers dieser erste Schieber in seine Rückzugsposition gelangt, während gleichzeitig der zweite Schieber in seine Ausgangsposition gelangt, ausgehend von der der zweite Schieber sofort einen neuen Verschiebevorgang durchführen kann. Somit ist sofort nach dem Rückzug eines Schiebers immer der andere Schieber für einen neuen Verschiebevorgang bereit, was bedeutet, dass keine Zeit damit verloren wird, einen Schieber aus seiner Rückzugsposition in seine Ausgangsposition zu bewegen.

Insbesondere lassen sich die Schieber derart bewegen, dass sich ein Schieber von seiner Ausgangsposition in seine Verschiebeposition und anschließend in seine Rückzugsposition bewegt, während sich der andere Schieber gleichzeitig aus seiner Rückzugsposition in seine Ausgangsposition bewegt.

Weiter ist es besonders einfach, bei konstanter Förderrichtung beide Hebel um ihre jeweiligen Drehachsen in einer unveränderlichen Drehrichtung anzutreiben. Eine Änderung der Drehrichtung kann allerdings dann erfolgen, wenn die Förderrichtung des Fördermittels umgeschaltet wird. Weiter wird die Ansteuerung vereinfacht, wenn sich beide Hebel mit konstanter Winkelgeschwindigkeit um ihre jeweiligen Drehachsen drehen.

Der erste Hebel ist bevorzugt länger ausgebildet, insbesondere um ein Mehrfaches, beispielsweise um das Zwei- bis Vierfache, insbesondere um das Dreifache, als der zweite Hebel. Durch diese Längenverhältnisse kann der zweite Hebel während des Verschiebevorgangs und des daran anschliessenden Rückzugsvorgangs in sinnvoller Weise dafür eingesetzt werden, den Abstand zwischen Schieber und Drehachse des ersten Hebels zu verringern bzw. zu vergrössern.

Der zweite Hebel kann in der Verschiebeposition des Schiebers eine axial ausgerichtete Verlängerung des ersten Hebels bilden, so dass in dieser Position der maximale Abstand zwischen Schieber und Drehachse des ersten Hebels erzeugt wird, um so ein Verschieben des Gegenstands über eine möglichst grosse Wegstrecke zu ermöglichen. Bildet der zweite Hebel nur in der Verschiebeposition des Schiebers eine axial ausgerichtete Verlängerung des ersten Hebels, erreicht die Gesamtanordnung aus erstem und zweitem Hebel ausschliesslich in der Verschiebeposition ihre maximale Länge. In allen weiteren Positionen, bei denen sich der Schieber im Förderbereich befindet, ist die genannte Länge gegenüber der maximalen Länge verkürzt, so dass durch die Gesamtanordnung im Förderbereich in Förderrichtung gesehen möglichst wenig Platz beansprucht wird.

Die Verlängerung der Drehachse des ersten Hebels kann sich durch den Förderbereich, insbesondere durch einen Randbereich des Förderbereichs erstrecken. Dadurch lässt sich besonders einfach erreichen, dass sich die Ausgangsposition sowie die Rückzugsposition des Schiebers ausserhalb des Förderbereichs befinden und die Verschiebeposition einen möglichst grossen Abstand zur Ausgangs- bzw. Rückzugsposition hat, wobei dieser Abstand im Wesentlichen der Breite des Fördermittels entsprechen sollte.

Die Erfindung wird nachfolgend anhand von Ausführungsbeispielen unter Bezugnahme auf die Zeichnung beschrieben; in diesen zeigen:
- Fig. 1: eine Draufsicht auf ein Gegenstände transportierendes Fördermittel mit einer daran montierten möglichen Ausführungsform einer erfindungsgemäßen Vorrichtung,
- Fig. 2: eine Draufsicht auf eine zwei Fördermittel umfassende Förderstrecke mit vier daran montierten erfindungsgemäßen Vorrichtungen gemäß Fig. 1,
- Fig. 3: einen Schnitt durch die gesamte Vorrichtung gemäß Fig. 1 in Blickrichtung quer zur Förderrichtung,
- Fig. 4: eine Seitenansicht einer Vorrichtung gemäß Fig. 1, wobei die Blickrichtung der Förderrichtung entspricht, und
- Fig. 5: eine teilweise geschnittene Ansicht desjenigen Bereichs der Vorrichtung gemäß den Fig. 1, in dem der Schieber mit dem zweiten Hebel und der zweite Hebel mit dem ersten Hebel verbunden sind.

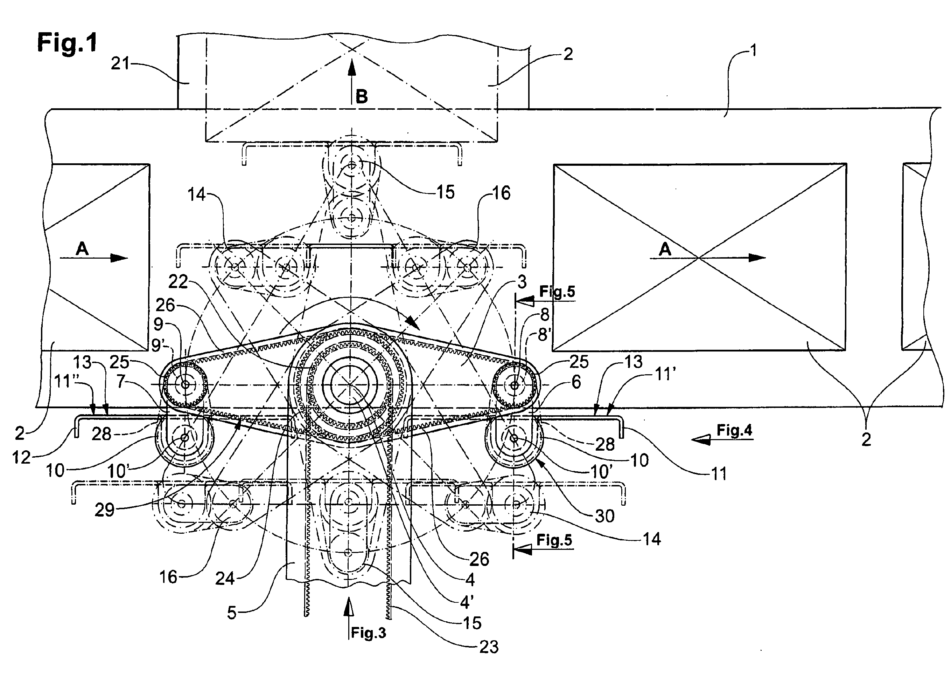

Fig. 1 zeigt in der Draufsicht ein beispielsweise als Förderband ausgebildetes Fördermittel 1, auf welchem einzelne, vergleichsweise dicht aufeinanderfolgende Gegenstände 2 in Förderrichtung A transportiert werden. Fig. 1 zeigt ferner einen Wegförderer 21, dessen Förderrichtung der Verschieberichtung B entspricht und die somit senkrecht zur Förderrichtung A des Fördermittels 1 verläuft. Mittels der erfindungsgemäßen Anordnung gemäß Fig. 1 können Gegenstände 2 vom Fördermittel 1 auf den Wegförderer 21 verschoben werden.

Einer der aufeinander folgenden Gegenstände 2, welcher in Fig. 1 strichpunktiert dargestellt ist, befindet sich in einer Position, in welcher er von einer erfindungsgemäßen Vorrichtung vollständig quer zur Förderrichtung A auf den Wegförderer 21 verschoben wurde.

Die erfindungsgemäße Vorrichtung weist einen als Doppelhebel ausgebildeten ersten Hebel 3 auf, welcher in Fig. 1 in einer ersten Position mit durchgezogenen Linien gezeigt ist. Dieser erste Hebel 3 ist um eine senkrecht zur Zeichenebene verlaufende von einem Hauptlagerschaft 4' definierte Drehachse 4 drehbar gelagert, wobei sich die Verlängerung der Drehachse 4 durch einen Randbereich des Fördermittels 1 erstreckt. Der erste Hebel 3 ist bezogen auf den Schnittpunkt der Drehachse 4 mit der Zeichenebene punktsymmetrisch ausgebildet und verjüngt sich mit zunehmender Entfernung von der Drehachse 4.

Es ist weiterhin ein stationärer Tragarm 5 vorgesehen, welcher sich von außerhalb des Förderbereichs quer zur Förderrichtung A bis in den Bereich der Drehachse 4 hineinstreckt, wobei der Tragarm 5 so weit oberhalb des Fördermittels 1 angeordnet ist, dass die auf dem Fördermittel 1 transportierten Gegenstände 2 nicht mit dem Tragarm 5 oder daran befestigten weiteren Bauteilen der erfindungsgemäßen Vorrichtung kollidieren. Am Tragarm 5 ist der Hauptlagerschaft 4' befestigt, welcher den ersten Hebel 3 durchgreift und an welchem dieser um die Drehachse 4 drehbar gelagert ist.

An den beiden der Drehachse 4 abgewandten Enden des als Doppelhebel ausgebildeten ersten Hebels 3 ist jeweils ein zweiter Hebel 6, 7 drehbar gelagert, wobei die Längserstreckung der Hebel 6, 7 ungefähr einem Drittel des Abstands zwischen der Drehachse 4 des ersten Hebels 3 und einer der von Nebenlagerschäften 8', 9' definierten Drehachsen 8, 9 der zweiten Hebel 6, 7 entspricht. Diese sind von zugeordneten, am ersten Hebel 3 befestigten Nebenlagerschaft 8',9' durchgriffen und an ihm drehbar gelagert.

Zum besseren Verständnis werden im Folgenden der erste Hebel 3 als Doppelarmhebel 3 und die zweiten Hebel 6, 7 als Laschen 6, 7 bezeichnet.

An den den Drehachsen 8, 9 abgewandten Enden der Laschen 6, 7 ist jeweils um eine Drehachse 10' drehbar ein Schieberzahnrad 10 gelagert. Die Schieberzahnräder 10 sind an ihrer dem Fördermittel 1 zugewandten Unterseite jeweils mit einem Schieber 11, 12 drehfest verbunden, wobei sich die Schieber 11, 12 ausgehend von den Schieberzahnrädern 10 so weit nach unten in Richtung des Fördermittels 1 erstrecken, dass sie - im Gegensatz zu den Schieberzahnrädern 10 - in direkten Kontakt mit den auf dem Fördermittel 1 geförderten Gegenständen 2 gelangen können. Bevorzugt reichen die Schieber 11, 12 bis nahe zum Fördermittel 1. Jeder der beiden Schieber 11, 12 besitzt eine dem Förderbereich zugewandte, sich senkrecht zur Zeichenebene erstreckende Kontaktfläche 13, deren Erstreckung senkrecht zur Zeichenebene ungefähr der Höhe der nächsten zu verarbeitenden Gegenstände 2 entspricht. Die Erstreckung der ebenen Kontaktflächen 13 in Förderrichtung ist etwas geringer bemessen als die Länge der Gegenstände 2. Beide Schieber 11, 12 bestehen jeweils aus einem U-förmig gebogenen Metallstreifen, wobei sich diese U-Profile der Schieber 11, 12 in eine zur Verschieberichtung B entgegengesetzte Richtung öffnen.

Mittels einer nachstehend noch näher erläuterten Antriebsmechanik wird der Doppelarmhebel 3 im Uhrzeigersinn um seine Drehachse 4 gedreht, während sich die Laschen 6, 7 um ihre Drehachsen 8, 9 entgegen dem Uhrzeigersinn drehen. Dabei drehen sich die Laschen 6, 7 bezüglich des Doppelarmhebels 3 dreimal so schnell um ihre Achsen 8, 9 wie sich der Doppelarmhebel 3 um seine Drehachse 4 dreht. Konkret führen also die Laschen 6, 7 eine Drehung um 540° um ihre Drehachsen 8, 9 durch, während der Doppelarmhebel 3 eine Drehung um 180° um seine Drehachse 4 ausführt.

In Fig. 1 sind strichpunktiert drei weitere Positionen 14, 15, 16 dargestellt, welche die Doppelarmhebel 3, Laschen 6, 7, Schieberzahnräder 10 und Schieber 11, 12 einnehmen, nachdem der Doppelarmhebel 3 ausgehend von seiner in Fig. 1 mit durchgezogenen Linien gezeichneten Position um Schritte von jeweils 45° im Uhrzeigersinn verdreht wurde.

In der mit durchgezogenen Linien gezeichneten Position befindet sich der in Förderrichtung A stromabwärts gelegene Schieber 11 in seiner Rückzugsposition 11' und der stromaufwärtsgelegene Schieber 12 in seiner Ausgangsposition 11'' - seitlich des Fördermittels 1 ausserhalb der Bewegungsbahn der Gegenstände - in welcher er für den Beginn eines Verschiebevorgangs bereit ist. Weiter verlaufen die Laschen 6, 7 in dieser Position rechtwinklig zum Doppelarmhebel 3 und zur Förderrichtung A. Sie stehen vom Doppelarmhebel 3 entgegen der Verschieberichtung B ab. Bei Bewegung des Doppelarmhebels 3 in Position 14 schwenkt die Lasche 7 nach innen, in Richtung der Drehachse 4 des Doppelarmhebels 3, wobei sich das Schieberzahnrad 10 derart verdreht, dass die Kontaktfläche 13 des Schiebers 12 immer parallel zu sich und zur Förderrichtung A ausgerichtet bleibt. Gleichzeitig schwenkt die Lasche 6 nach außen von der Drehachse 4 des Doppelarmhebels 3 weg, wobei sich auch hier das Schieberzahnrad 10 derart dreht, dass die Kontaktfläche 13 des Schiebers 11 parallel zur Förderrichtung A ausgerichtet bleibt. Diese Ausrichtung der Kontaktflächen 13 der Schieber 11, 12 ist durch eine entsprechende Ansteuerung der Schieberzahnräder 10 auch bei allen weiteren, in der folgenden Figurenbeschreibung beschriebenen Verfahrensschritten gegeben.

Nachdem die Lasche 7 soweit in Richtung der Drehachse verschwenkt wurde, dass ihre verlängerte Längsachse durch die Drehachse 4 verläuft, erfolgt eine weitere Schwenkbewegung der Lasche 7, die nun jedoch wieder von der Drehachse 4 des Doppelarmhebels 3 weg gerichtet ist, bis die Position 14 erreicht ist, in welcher sich die Längsachse der Lasche 7 parallel zur Förderrichtung A erstreckt. Entsprechendes gilt für die Lasche 6, welche erst entgegengesetzt dem Uhrzeigersinn nach außen von der Drehachse 4 weggeschwenkt wird, bis sie eine Verlängerung des Doppelarmhebels 3 darstellt, woraufhin sie weiter gegen den Uhrzeigersinn wiederum nach innen, in Richtung der Drehachse 4 des Doppelarmhebels 3 verschwenkt wird, bis sie außerhalb des Förderbereichs in Position 14 gelangt, in der sich die Längsachse der Lasche 6 ebenfalls parallel zur Förderrichtung A erstreckt.

Die Positionen 15 und 16 werden dann durch entsprechende weitere Drehungen von Doppelhebelarm 3, Laschen 6, 7 und Schieberzahnrädern 10 erreicht, wobei sich der Doppelarmhebel 3 zwischen aufeinanderfolgenden Positionen 14, 15 und 16 jeweils um 45° im Uhrzeigersinn dreht, während sich die Laschen 6, 7 gegen den Uhrzeigersinn von Position zu Position bezüglich des Doppelarmhebels 3 um jeweils 135° drehen.

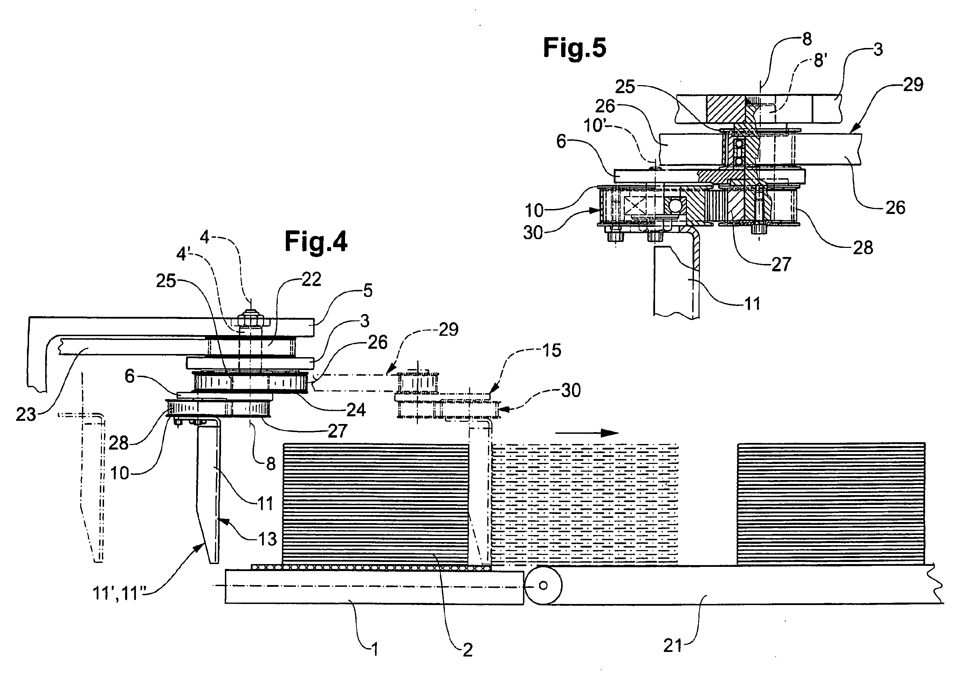

In Position 15 befindet sich der Schieber 12 in seiner Verschiebeposition - siehe auch Fig. 4 - , in welcher der strichpunktiert dargestellte Gegenstand 2 vollständig in Richtung B verschoben wurde, während sich der Schieber 11 in Position 15 zwischen seiner Rückzugsposition 11' und seiner Ausgangsposition 11" außerhalb des Förderbereichs befindet. In Position 16 befindet sich der Schieber 12 in seiner Rückzugsbewegung zwischen der Verschiebeposition 15 und der Rückzugsposition 11'. Der Schieber 11 befindet sich weiterhin auf dem Weg von seiner Rückzugsposition 11' in seine Ausgangsposition 11". Anschließend gelangt dann der Schieber 11 in seine Ausgangsposition 11", welche in Fig. 1 bezüglich des Schiebers 12 mit durchgezogenen Linien dargestellt ist. In entsprechender Weise gelangt der Schieber 13 nach seiner Position 16 in seine Rückzugsposition 11', welche in Fig. 1 bezüglich des Schiebers 11 mit durchgezogenen Linien dargestellt ist. Aus Fig. 1 ist dabei zu ersehen, dass die Laschen 6, 7 in der Ausgangsposition 11" sowie auch in der Rückzugsposition 11' senkrecht zum Doppelarmhebel 3 orientiert sind.

Der vorstehend beschriebene Bewegungsablauf macht deutlich,
- dass während einer Verschiebebewegung der Schieber 11, 12 aus ihrer Ausgangsposition 11'' in ihre Verschiebeposition 15 die Laschen 6, 7 jeweils eine 270°-Drehung um ihre Drehachsen 8, 9 ausführen, während der Doppelarmhebel 3 eine 90°-Drehung um seine stationäre Drehachse 4 ausführt,
- dass während einer Rückzugsbewegung der Schieber 11, 12 aus ihrer Verschiebeposition 15 in ihre Rückzugsposition 11' die Laschen 6, 7 jeweils eine 270°-Drehung um ihre Drehachsen 8, 9 ausführen, während der Doppelarmhebel 3 eine 90°-Drehung um seine stationäre Drehachse 4 ausführt,
- dass während der Bewegung der Schieber 11, 12 aus ihrer Rückzugsposition 11' in ihre Ausgangsposition 11'' die Laschen 6, 7 jeweils eine 540°-Drehung um ihre Drehachsen 8, 9 ausführen, während der Doppelarmhebel 3 eine 180°-Drehung um seine stationäre Drehachse 4 ausführt.
- die Schieber 11, 12 eine zu sich parallele Drehlage beibehalten, und
- die Bewegungsbahn des Schiebers 11, 12 einen nahezu gleichseitigen Dreieck mit gerundeten Ecken entspricht.

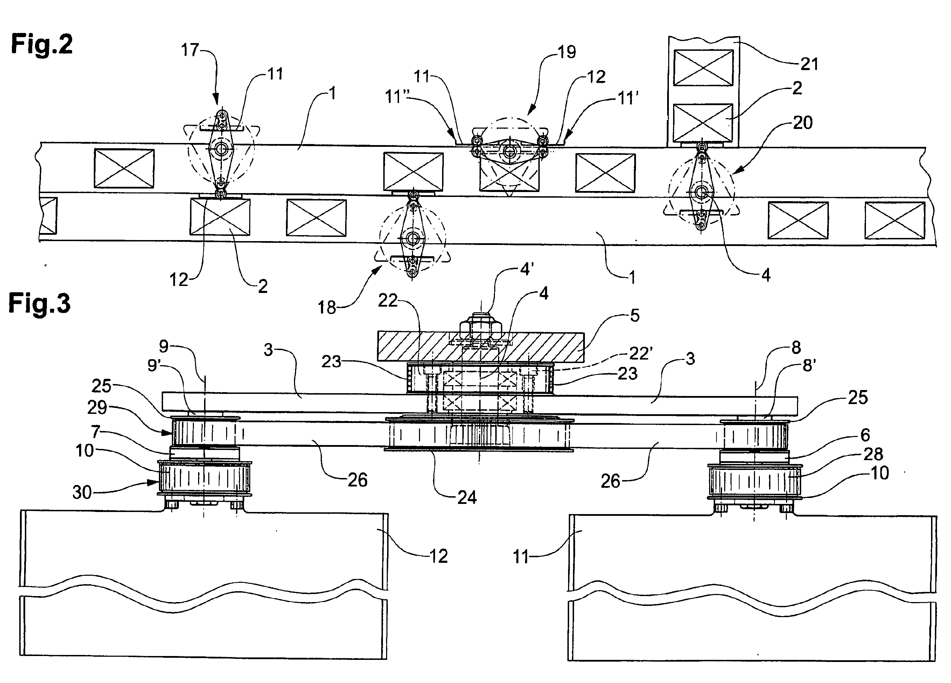

Fig. 2 zeigt, dass entlang einer Förderstrecke, die aus zwei parallel zueinander verlaufenden Fördermitteln 1 besteht, mehrere erfindungsgemäße Anordnungen 17, 18, 19 und 20 angeordnet werden können. Die erfindungsgemäßen Anordnungen 17 und 19 gemäß Fig. 2 dienen dazu, Gegenstände 2 bei Bedarf von einem ersten Fördermittel auf ein zweites Fördermittel quer zur Förderrichtung zu verschieben. Die Anordnung 17 befindet sich in einer Position, in der gerade ein Gegenstand verschoben wurde, so dass sich ein Schieber 12 in seiner Verschiebeposition befindet, während sich der andere Schieber 11 gerade aus seiner Rückzugsposition in seine Ausgangsposition bewegt. Bei der Anordnung 19 befindet sich ein Schieber 12 in seiner Rückzugsposition 11', während sich der Schieber 11 in seiner Ausgangsposition 11' befindet.

Die Anordnung 18 ist auf der den Anordnungen 17, 19 gegenüberliegenden Seite der Förderstrecke angeordnet und kann dementsprechend dazu dienen, Gegenstände 2 vom zweiten Fördermittel auf das erste Fördermittel zu verschieben.

Die Anordnung 20 hingegen ist mit ihrer Drehachse 4 des Doppelarmhebels 3 im Grenzbereich zwischen beiden Fördermitteln angeordnet, so dass diese Anordnung 20 dazu dienen kann, Gegenstände 2 von dem ersten Fördermittel auf einen Wegförderer 21 auszuschleusen, d.h. einen Gegenstand 2 aus dem Bereich des ersten und des zweiten Fördermittels herauszubewegen.

Die Fig. 3, 4 und 5 veranschaulichen in Verbindung mit Fig. 1 den aus mehreren Zahnrädern und Zahnriemen bestehenden Antrieb vom Doppelarmhebel, Laschen 6, 7 und Schieberzahnrädern 10. Dieser Antrieb wird im Folgenden unter Bezugnahme auf die vier genannten Figuren erläutert:

Der Doppelarmhebel 3 ist über den die Drehachse 4 definierenden Hauptlagerschaft 4' am stationären Tragarm 5 drehbar gelagert. Dabei weist der Doppelarmhebel 3 ein drehfest mit ihm verbundenes inneres Doppelarmzahnrad 22 auf, welches gemeinsam mit dem Doppelarmhebel 3 über einen von einem nicht dargestellten Antriebsmotor beaufschlagten Antriebszahnriemen 23 in eine drehende Bewegung um die Drehachse 4 versetzbar ist. Das Doppelarmzahnrad 22 liegt an der Oberseite des Doppelarmhebels 3 an und ist mittels Schrauben 22' an diesem befestigt.

Der Tragarm 5 ist drehfest mit einem Tragarmzahnrad 24 verbunden, welches unterhalb des Doppelarmhebels 3 auf dem Hauptlagerschaft 4' sitzt und dessen Achse mit der Drehachse 4 des Doppelarmhebels 3 zusammenfällt.

Der Doppelarmhebel 3 weist an seinen beiden Enden jeweils ein um die Drehachsen 8, 9 drehbar gelagertes Laschenzahnrad 25 auf, welches jeweils mit der ihm zugeordneten Lasche 6, 7 drehfest verbunden ist. Wenn sich also das Laschenzahnrad 25 relativ zum Doppelarmhebel 3 verdreht, wird die Lasche 6, 7 entsprechend mitgedreht.

Die Laschenzahnräder 25 sind an Nebenlagerschäften 8',9' gelagert, die am Doppelarmhebel 3 drehfest angeordnet sind und von diesem gegen unten abstehen. Die Laschen 6, 7 sind unmittelbar unter den Laschenzahnrädern 25 angeordnet.

Die beiden Laschenzahnräder 25 besitzen einen Durchmesser, der ein Drittel so groß ist wie der Durchmesser des Tragarmzahnrads 24. Die beiden Laschenzahnräder 25 und das Tragarmzahnrad 24 sind von einem gemeinsamen endlosen Laschenzahnriemen 26 umspannt.

Der Doppelarmhebel 3 besitzt an seinen beiden Enden ferner jeweils ein äußeres Doppelarmzahnrad 27, welches drehfest mit ihm verbunden ist, wobei die Achsen der äußeren Doppelarmzahnräder 27 mit den Drehachsen 8, 9 der Laschen 6, 7 zusammenfallen. Die äusseren Doppelarmzahnräder 27 sitzen unterhalb der Laschen 6 drehfest auf den Nebenlagerschäften 8' und 9'. Weiter sind sie mittels Schieberzahnriemen 28 jeweils mit Schieberzahnrädern 10 verbunden, die jeweils einen eineinhalbfachen Durchmesser aufweisen, wie die äußeren Doppelarmzahnräder 27. Die Schieberzahnräder 10 sind dabei um die Drehachsen 10' drehbar an den Laschen 6, 7 gehalten, wobei die Schieberzahnräder 10 drehfest mit den Schiebern 11, 12 verbunden sind; letztere sind von unten an die Schiebezahnräder 10 angeschraubt. In der in Fig. 1 mit ausgezogenen Linien gezeigten Stellung befinden sich die Kontaktflächen 13 der Schieber 11, 12 wenigstens annährend in der Mitte der Laschen 6, 7, somit etwa in der Mitte zwischen den Drehachsen 8, 9 und den Achsen 10' der Schiebezahnräder 10.

Das innere Doppelarmzahnrad 22 befindet sich gemeinsam mit dem Antriebszahnriemen 23 in einer Ebene unterhalb des Tragarms 5. Eine weitere Ebene tiefer angeordnet ist der Doppelarmhebel 3. In der Ebene unterhalb des Doppelarmhebels 3 befinden sich das Tragarmzahnrad 24, die Laschenzahnräder 25, sowie der Laschenzahnriemen 26. Unterhalb der letztgenannten Ebene sind in einer weiteren Ebene die Laschen 6, 7 angeordnet, wobei sich unterhalb der Laschen 6,7 noch die Schieberzahnräder 10, die äußeren Doppelarmzahnräder 27 und die Schiebezahnriemen 28 befinden. Die Anordnungen dieser Ebenen unmittelbar untereinander führt zu einer äusserst kompakten und stabilen Bauweise. Die formschlüssigen Kraftübertragungen mittels Zahnrädern und Zahnriemen führt zu einem genauen, ruhigen Betrieb. Beides zusammen lässt einen schnellen Betrieb der Vorrichtung zu.

Das Tragarmzahnrad 24, die Laschenzahnräder 25 und der mit diesen Zahnrädern 24, 25 zusammen wirkende Laschenzahnriemen 26 bilden eine erste Getriebeverbindung 29 welche die Laschen 6, 7 in Abhängigkeit von der Bewegung des Doppelarmhebels 3 dreht. Eine zweite Getriebeverbindung 30, gebildet von dem Schiebezahnrädern 10, den äusseren Doppelarmzahnrädern 27 und dem Schieberzahnriemen 28, hält die Schieber 11, 12 in einer zu sich parallelen Lage.

Beim Betrieb der erfindungsgemäßen Vorrichtung wird nun der Antriebszahnriemen 23 in Bewegung gesetzt, so dass dieser über das innere Doppelarmzahnrad 22 den Doppelarmhebel 3 in eine drehende Bewegung um die Drehachse 4 versetzen kann. Auf diese Weise entsteht eine drehende Relativbewegung zwischen dem fest mit dem Tragarm 5 verbundenen Tragarmzahnrad 24 und den Laschenzahnrädern 25, so dass der Laschenzahnriemen 26 die Laschenzahnräder 25 in eine drehende Bewegung um die Drehachsen 8, 9 versetzt. Gleichzeitig mit den Laschenzahnrädern 25 drehen sich dann auch die Laschen 6, 7 um die Drehachsen 8, 9.

Durch diese Drehung der Laschen 6, 7 wird wiederum bewirkt, dass sich die Schiebezahnriemen 28 an den fest mit dem Doppelarmhebel 3 verbundenen äußeren Doppelarmzahnrädern 27 abwälzen, so dass eine Drehbewegung zwischen den Schieberzahnrädern 10 bzw. den Schiebern 11, 12 und den Laschen 6, 7 erzeugt wird.

Durch die beschriebene mechanische Kopplung von Tragarm 5, Doppelarmhebel 3, Laschen 6, 7 und Schieberzahnrädern 10 wird so letztlich die im Zusammenhang mit Fig. 1 erläuterte Bewegung der Schieber 11, 12 erzeugt. Durch die oben erwähnten Übersetzungs- und Längenverhältnisse bewegen sich die Schieber 11, 12 - eine zu sich parallele Drehlage behaltend - entlang einer in Fig. 1 gestrichelt angedeuteten Bewegungsbahn, welche einem gleichseitigen Dreieck mit geradlinigen Seiten und gerundenten Ecken sehr nahe kommt.

Am unteren Ende der Schieber 12 können an diesen vorzugsweise auslenkbare Mittel, wie Bürsten oder Lappen, angebracht sein, die über das Fördermittel 1 streichen, um auch dünne, auf dem Fördermittel 1 aufliegende Gegenstände 2 zu verschieben.

Es ist auch möglich, an Stelle des Laschenzahnriemens 26, zwischen dem Tragarmzahnrad 24 und jedem der Laschenzahnräder 25 einen am Doppelarmhebel 3 frei drehbar gelagertes Zahnrad vorzusehen welches mit dem Tragarmzahnrad 24 und dem angeordneten Laschenzahnrad kämmt. Entsprechendes gilt für die Verbindung der äusseren Doppelarmzahnräder 27 mit den Schiebezahnrädern 10; die dazwischen angeordneten Zahnräder sind an den Laschen 6, 7 zu lagern. Selbstverständlich können an Stelle der Zahnriemen auch Ketten eingelegt werden.

## Patentansprüche

1. Vorrichtung zum Verschieben von auf einem Fördermittel (1) geförderten Gegenständen mit einem Schieber (11, 12), welcher von einer Antriebseinheit beaufschlagt auf einer vorgegebenen Umlaufbahn umläuft und während des Verschiebevorgangs sowohl mit einer rechtwinklig zur Förderrichtung (A) als auch mit einer in Förderrichtung (A) verlaufenden Bewegungskomponente angetrieben ist, wobei die Antriebseinheit einen um eine Drehachse (4) drehend antreibaren ersten Hebel (3), an dessen der Drehachse (4) abgewandtem Ende ein zweiter Hebel (6, 7) drehbar gelagert ist, der wiederum, an seinem dem ersten Hebel (3) abgewandten Ende, drehbar mit dem Schieber (11, 12) verbunden ist, eine erste Getriebeverbindung (29), welche den zweiten Hebel (6,7) in Abhängigkeit von der Bewegung des ersten Hebels (3) dreht, und eine zwischen dem ersten Hebel (3) und dem Schieber (11,12) wirkende zweite Getriebeverbindung (30), welche den Schieber (11,12) in einer zu sich parallelen Lage hält, aufweist, **dadurch gekennzeichnet, dass** ein zur Drehachse (4) koaxialer Hauptlagerschaft (4') drehfest an einem Tragarm (5) angeordnet ist, der erste Hebel (3) vom Hauptlagerschaft (4') durchgriffen und drehbar an diesem gehalten ist, ein Nebenlagerschaft (8',9') am ersten Hebel (3) drehfest angeordnet ist, der zweite Hebel (6,7) vom Nebenlagerschaft (8',9') durchgriffen und drehbar an diesem gehalten ist, die erste Getriebeverbindung (29) bezüglich des ersten Hebels (3) auf der dem Tragarm (5) abgewandten Seite angeordnet ist und den Hauptlagerschaft (4') mit dem zweiten Hebel (6,7) verbindet, und die zweite Getriebeverbindung (30) bezüglich des zweiten Hebels (6,7) auf der dem ersten Hebel (3) abgewandten Seite angeordnet ist und den Nebenlagerschaft (8',9') mit dem Schieber (11,12) verbindet.

2. Vorrichtung nach Anspruch 1,**dadurch gekennzeichnet, dass** die erste und die zweite Getriebeverbindung (29,30) durch ein Zahnriemen- oder ein Zahnradgetriebe gebildet sind.

3. Vorrichtung nach Anspruch 1 oder 2, **dadurch gekennzeichnet, dass** der erste Hebel (3) als Doppelarmhebel ausgebildet ist, dessen beide Arme sich in entgegengesetzte Richtungen erstrecken und an ihren der Drehachse (4) abgewandten Enden jeweils einen zweiten Hebel (6, 7) mit Schieber (11, 12) aufweisen.

4. Vorrichtung nach Anspruch 3, **dadurch gekennzeichnet, dass** die den Armen des Doppelarmhebels (3) zugeordneten ersten Getriebeverbindungen (29)ein ihnen gemeinsames, auf dem Hauptlagerschaft (4') drehfest sitzendes Tragarmzahnrad (24) aufweisen.

5. Vorrichtung nach einem der Ansprüche 1 bis 4, **dadurch gekennzeichnet, dass** zwischen dem Tragarm (5) und dem ersten Hebel (3) ein mit diesem ersten Hebel (3) drehfest verbundenes Zahnrad (22) angeordnet ist, das dazu bestimmt ist, von einem Antriebsmotor angetrieben zu sein.

6. Vorrichtung nach einem der Ansprüche 1 bis 5, **dadurch gekennzeichnet, dass** der Schieber (11, 12) derart am zweiten Hebel (6, 7) drehbar gelagert ist, dass sich eine mit dem zu verschiebenden Produkt (2) in Kontakt zu bringende Schieberfläche (13) während der gesamten Umlaufbewegung des Schiebers (11, 12) parallel zur Förderrichtung (A) erstreckt.

7. Vorrichtung nach Anspruch 6, **dadurch gekennzeichnet, dass** die Schieberfläche (13) zu einer Drehachse (10'), um welche der Schieber (11,12) am zweiten Hebel (6,7) drehbar gelagert ist, einen Abstand aufweist, der wenigstens annähernd der halben Länge des zweiten Hebels (6,7) entspricht.

8. Vorrichtung nach einem der Ansprüche 1 bis 7,**dadurch gekennzeichnet, dass** der stationäre Tragarm (5) sich bis in einen Bereich oberhalb des Fördermittels (1) erstreckt, der Schieber (11, 12) unterhalb des ersten und zweiten Hebels (3, 6, 7) angeordnet ist und die Gegenstände (2) mittels des Fördermittels (1) unterhalb dieser Hebel (3, 6, 7) an diesen vorbei förderbar sind.

9. Vorrichtung nach einem der Ansprüche 1 bis 8, **dadurch gekennzeichnet, dass** das untere Ende des Schiebers (11,12), in vertikaler Richtung gesehen, sich nahe beim Fördermittel (1) befindet und vorzugsweise auslenkbare Schiebemittel, wie Bürsten oder Lappen, aufweist, die beim Verschiebevorgang über das Fördermittel (1) streichen, um auch dünne, auf dem Fördermittel (1) aufliegende Gegenstände (2) zu verschieben.

10. Vorrichtung nach einem der Ansprüche 1 bis 9,**dadurch gekennzeichnet, dass** die Hebel (3, 6, 7) und der Schieber (11, 12) intermittierend angetrieben sind.

11. Vorrichtung nach einem der Ansprüche 1 bis 10, **dadurch gekennzeichnet, dass** der Schieber (11, 12) zum Verschieben eines Produktes (2) aus einer Ausgangsposition (11") durch den Förderbereich des Fördermittels (1) in eine das Ende des Verschiebevorgangs kennzeichnende Verschiebeposition (15), nach dem Verschiebevorgang aus seiner Verschiebeposition (15) in eine außerhalb des Förderbereichs gelegene Rückzugsposition (11'), und anschließend außerhalb des Förderbereichs aus seiner Rückzugsposition (11') wieder in seine Ausgangsposition (11") bewegbar ist, bei der Verschiebebewegung und bei der Bewegung des Schiebers (11, 12) in die Rückzugsposition (11') die Größe der parallel zur Förderrichtung (A) verlaufenden Bewegungskomponente des Schiebers (11, 12) zumindest im Wesentlichen gleich der Fördergeschwindigkeit des Fördermittels (1) ist und die Umlaufbahn im Wesentlichen ein gleichseitiges Dreieck bildet.

12. Vorrichtung nach einem der Ansprüche 1 bis 11, **dadurch gekennzeichnet, dass** die Hebel (3, 6, 7) derart angetrieben sind, dass der zweite Hebel (6, 7) nach Verlassen der Ausgangsposition in Richtung der Drehachse (4) des ersten Hebels (3) schwenkt.

13. Vorrichtung nach einem der Ansprüche 1 bis 12, **dadurch gekennzeichnet, dass** der zweite Hebel (6, 7) eine 540°-Drehung um seine am Ende des ersten Hebels (3) befindliche Drehachse (8, 9) ausführt, während der erste Hebel (3) eine 180°-Drehung um seine stationäre Drehachse (4) ausführt.

## Claims

1. Apparatus for displacing articles conveyed on a conveying means (1), having a pusher (11, 12) which, subjected to the action of a drive unit, circulates on a predetermined circulatory path and, during the displacement operation, is driven both with a movement component which runs at right angles to the conveying direction (A) and with a movement component which runs in the conveying direction (A), it being the case that the drive unit has a first lever (3), which can be driven in rotation about an axis of rotation (4) and has a second lever (6, 7) mounted in a rotatable manner at its end which is directed away from the axis of rotation (4), this second lever in turn, at its end which is directed away from the first lever (3), being connected in a rotatable manner to the pusher (11, 12), a first gear connection (29), which rotates the second lever (6, 7) in dependence on the movement of the first lever (3), and a second gear connection (30), which acts between the first lever (3) and the pusher (11, 12) and retains the pusher (11, 12) in a position parallel to itself, **characterized in that** a main bearing shaft (4'), which is coaxial with the axis of rotation (4), is arranged in a rotationally fixed manner on a carrying arm (5), the first lever (3) has the main bearing shaft (4') engaging through it and is retained in a rotatable manner thereon, a secondary bearing shaft (8', 9') is arranged in a rotationally fixed manner on the first lever (3), the second lever (6, 7) has the secondary bearing shaft (8', 9') engaging through it and is retained in a rotatable manner thereon, the first gear connection (29) is arranged, in respect of the first lever (3), on the side directed away from the carrying arm (5) and connects the main bearing shaft (4') to the second lever (6, 7), and the second gear connection (30) is arranged, in respect of the second lever (6, 7), on the side directed away from the first lever (3) and connects the secondary bearing shaft (8', 9') to the pusher (11, 12).

2. Apparatus according to Claim 1, **characterized in that** the first and the second gear connections (29, 30) are formed by a toothed-belt or a gearwheel mechanism.

3. Apparatus according to Claim 1 or 2, **characterized in that** the first lever (3) is designed as a double-arm lever, of which the two arms extend in opposite directions and, at their ends which are directed away from the axis of rotation (4), each have a second lever (6, 7) with a pusher (11, 12).

4. Apparatus according to Claim 3, **characterized in that** the first gear connections (29), which are assigned to the arms of the double-arm lever (3), have a carrying-arm gearwheel (24) which is common to them and is seated in a rotationally fixed manner on the main bearing shaft (4').

5. Apparatus according to one of Claims 1 to 4, **characterized in that** arranged between the carrying arm (5) and the first lever (3) is a gearwheel (22) which is connected in a rotationally fixed manner to this first lever (3) and is intended to be driven by a drive motor.

6. Apparatus according to one of Claims 1 to 5, **characterized in that** the pusher (11, 12) is mounted in a rotatable manner on the second lever (6, 7) such that a pusher surface (13) which is to be brought into contact with the product (2) which is to be displaced extends parallel to the conveying direction (A) throughout the circulatory movement of the pusher (11, 12).

7. Apparatus according to Claim 6, **characterized in that** the pusher surface (13) is spaced apart from an axis of rotation (10'), about which the pusher (11, 12) is mounted in a rotatable manner on the second lever (6, 7), by a distance which corresponds at least approximately to half the length of the second lever (6, 7).

8. Apparatus according to one of Claims 1 to 7, **characterized in that** the stationary carrying arm (5) extends into a region above the conveying means (1), the pusher (11, 12) is arranged beneath the first and second levers (3, 6, 7), and the articles (2) can be conveyed past these levers (3, 6, 7), beneath the same, by the conveying means (1).

9. Apparatus according to one of Claims 1 to 8, **characterized in that** the bottom end of the pusher (11, 12), as seen in the vertical direction, is located in the vicinity of the conveying means (1) and has preferably deflectable pushing means, such as brushes or fins, which sweep over the conveying means (1) during the displacement operation in order also to displace thin articles (2) lying on the conveying means (1).

10. Apparatus according to one of Claims 1 to 9, **characterized in that** the levers (3, 6, 7) and the pusher (11, 12) are driven intermittently.

11. Apparatus according to one of Claims 1 to 10, **characterized in that** it is possible for the pusher (11, 12) to be moved, in order to displace a product (2), out of a starting position (11"), through the conveying region of the conveying means (1), into a displacement position (15), which marks the end of the displacement operation, and, following the displacement operation, out of its displacement position (15) into a retracted position (11'), which is located outside the conveying region, and then, outside the conveying region, out of its retracted position (11') back into its starting position (11''), it being the case that, during the displacement movement and during the movement of the pusher (11, 12) into the retracted position (11'), the magnitude of the movement component of the pusher (11, 12) which runs parallel to the conveying direction (A) is at least essentially equal to the conveying speed of the conveying means (1), and the circulatory path essentially forms an equilateral triangle.

12. Apparatus according to one of Claims 1 to 11, **characterized in that** the levers (3, 6 ,7) are driven such that, after leaving the starting position, the second lever (6, 7) pivots in the direction of the axis of rotation (4) of the first lever (3).

13. Apparatus according to one of Claims 1 to 12, **characterized in that** the second lever (6, 7) executes a 540°-rotation about its axis of rotation (8, 9), located at the end of the first lever (3), while the first lever (3) executes a 180°-rotation about its stationary axis of rotation (4).

## Revendications

1. Dispositif pour déplacer des articles se trouvant sur un convoyeur (1), comprenant un poussoir (11, 12), qui est sollicité par une unité d'entraînement et qui circule sur une trajectoire de circulation prédéfinie et qui est entraîné pendant l'opération de déplacement à la fois avec une composante de déplacement perpendiculaire à la direction de transport (A) et avec une composante de déplacement s'étendant dans la direction de transport (A), l'unité d'entraînement présentant un premier levier (3) pouvant être entraîné en rotation autour d'un axe de rotation (4), sur l'extrémité opposée à l'axe de rotation (4) duquel est monté à rotation un deuxième levier (6, 7), qui à son tour est connecté à son extrémité opposée au premier levier (3), de manière rotative au poussoir (11, 12), une première connexion par engrenage (29) qui fait tourner le deuxième levier (6, 7) en fonction du mouvement du premier levier (3), et une deuxième connexion par engrenage (30) agissant entre le premier levier (3) et le poussoir (11, 12), qui retient le poussoir (11, 12) dans une position parallèle à lui-même, **caractérisé en ce qu'**une tige de palier principal (4') coaxiale à l'axe de rotation (4) est disposée de manière solidaire en rotation sur un bras de support (5), le premier levier (3) est traversé par la tige de palier principal (4') et est maintenu de manière à pouvoir tourner sur celle-ci, une tige de palier auxiliaire (8', 9') est disposée de manière solidaire en rotation sur le premier levier (3), le deuxième levier (6, 7) est traversé par la tige de palier auxiliaire (8', 9') et est maintenu de manière à pouvoir tourner sur celle-ci, la première connexion par engrenage (29) est disposée par rapport au premier levier (3) du côté opposé au bras de support (5) et relie la tige de palier principal (4') au deuxième levier (6, 7), et la deuxième connexion par engrenage (30) est disposée par rapport au deuxième levier (6, 7) du côté opposé au premier levier (3) et relie la tige de palier auxiliaire (8', 9') au poussoir (11, 12).

2. Dispositif selon la revendication 1, **caractérisé en ce que** la première et la deuxième connexion par engrenage (29, 30) sont formées par un engrenage à courroie dentée ou un engrenage à roue dentée.

3. Dispositif selon la revendication 1 ou 2, **caractérisé en ce que** le premier levier (3) est réalisé sous forme de levier à deux bras, dont les deux bras s'étendent dans des directions opposées et présentent, à leurs extrémités opposées à l'axe de rotation (4), à chaque fois présentent un deuxième levier (6, 7) avec le poussoir (11, 12).

4. Dispositif selon la revendication 3, **caractérisé en ce que** les premières connexions par engrenage (29) associées aux bras du levier à deux bras (3) présentent une roue dentée de bras de support (24) qui leur est commune, et repose de manière solidaire en rotation sur la tige de palier principal (4').

5. Dispositif selon l'une quelconque des revendications 1 à 4, **caractérisé en ce qu'**entre le bras de support (5) et le premier levier (3) est disposée une roue dentée (22) connectée de manière solidaire en rotation à ce premier levier (3), laquelle est prévue pour être entraînée par un moteur d'entraînement.

6. Dispositif selon l'une quelconque des revendications 1 à 5, **caractérisé en ce que** le poussoir (11, 12) est monté à rotation sur le deuxième levier (6, 7) de telle sorte qu'une surface du poussoir (13) devant être amenée en contact avec le produit à pousser (2) s'étende parallèlement à la direction de transport (A) pendant tout le mouvement de circulation du poussoir (11, 12).

7. Dispositif selon la revendication 6, **caractérisé en ce que** la surface du poussoir (13) présente, par rapport à un axe de rotation (10') autour duquel le poussoir (11, 12) est monté à rotation sur le deuxième levier (6, 7), une distance qui correspond au moins approximativement à la moitié de la longueur du deuxième levier (6, 7).

8. Dispositif selon l'une quelconque des revendications 1 à 7, **caractérisé en ce que** le bras de support stationnaire (5) s'étend jusque dans une région au-dessus du convoyeur (1), le poussoir (11, 12) est disposé en dessous du premier et du deuxième levier (3, 6, 7) et les articles (2) peuvent être transportés au moyen du convoyeur (1) en dessous de ces leviers (3, 6, 7) devant ceux-ci.

9. Dispositif selon l'une quelconque des revendications 1 à 8, **caractérisé en ce que** l'extrémité inférieure du poussoir (11, 12), vue dans la direction verticale, se trouve à proximité au niveau du convoyeur (1) et présente des moyens de poussée pouvant être déviés, comme des brosses ou des languettes, qui s'étirent sur le convoyeur (1) pendant l'opération de déplacement, afin de déplacer aussi des articles minces (2) reposant sur le convoyeur (1).

10. Dispositif selon l'une quelconque des revendications 1 à 9, **caractérisé en ce que** les leviers (3, 6, 7) et le poussoir (11, 12) sont entraînés de manière intermittente.

11. Dispositif selon l'une quelconque des revendications 1 à 10, **caractérisé en ce que** le poussoir (11, 12) peut être déplacé pour le déplacement d'un produit (2) d'une position de départ (11") à travers la région de transport du convoyeur (1) dans une position de déplacement (15) caractérisant la fin de l'opération de déplacement, après l'opération de déplacement, de sa position de déplacement (15) dans une position de retour (11') située en dehors de la région de transport, et ensuite en dehors de la région de transport depuis sa position de retour (11') à nouveau dans sa position de départ (11"), lors du mouvement de déplacement et lors du mouvement du poussoir (11, 12) dans la position de retour (11'), la valeur de la composante de déplacement du poussoir (11 ,12) s'étendant parallèlement à la direction de transport (A) étant au moins essentiellement égale à la vitesse d'avance du convoyeur (1) et la trajectoire de circulation formant essentiellement un triangle équilatéral.

12. Dispositif selon l'une quelconque des revendications 1 à 11, **caractérisé en ce que** les leviers (3, 6, 7) sont entraînés de telle sorte que le deuxième levier (6, 7) pivote dans la direction de l'axe de rotation (4) du premier levier (3) après avoir quitté la position de départ.

13. Dispositif selon l'une quelconque des revendications 1 à 12, **caractérisé en ce que** le deuxième levier (6, 7) effectue une rotation de 540° autour de son axe de rotation (8, 9) se trouvant à l'extrémité du premier levier (3), tandis que le premier levier (3) effectue une rotation de 180° autour de son axe de rotation stationnaire (4).
